# EUROPÄISCHE PATENTANMELDUNG

(11) **EP 0 809 183 A1**
(43) Veröffentlichungstag der Anmeldung: **26.11.1997**
(21) Anmeldenummer: 97108032.0
(22) Anmeldetag: 16.05.1997
(51) Int. Cl.: G06F 9/445

(54) **Verfahren und Anordnung zur Aktualisierung eines Teils eines Programmcodes während dessen Ausführung**

(30) Priorität: 23.05.1996 DE 19620888
(71) Anmelder: SIEMENS AKTIENGESELLSCHAFT, 80333 München (DE)
(72) Erfinder: Ilmberger, Hermann, 83052 Bruckmühl (DE); Schmitz, Jürgen, 85649 Otterloh (DE); Thürmel, Sabine, Dr., 82031 Grünwald (DE)

(57) **Zusammenfassung**

Es wird ein neuer Teil (NT) eines Programmcodes in eine Ereignisschleife "eingehängt", die von einer Aktualisierungs-Prozedur (AP) fortlaufend überprüft wird. Der neue Teil (NT) des Programmcodes wird von der Aktualisierungs-Prozedur (AP) gestartet, nachdem der neue Teil (NT) der Aktualisierungs-Prozedur (AP) übergeben wurde. Der neue Teil (NT) wird von einem Rechner (R) abgearbeitet und gespeichert.

## Beschreibung

Die Aktualisierung von Programmcode bzw. Teilen eines Programmcodes stellt ein technisch schwieriges Problem dar. Üblicherweise wird eine neue Version eines Programmcodes anstelle eines alten Programmcodes eingespielt und der zu aktualisierende alte Programmcode wird mit dem neuen Programmcode komplett überschrieben, obwohl nur Teile des Programmcodes verändert wurden. Dies führt üblicherweise zu Nutzungsausfallzeiten während der Einspielung der neuen Programmversion, während der ein Benutzer nicht mit dem Programm, welches durch den Programmcode repräsentiert wird, arbeiten kann.

Es sind verschiedenste Interpreter-Programmiersprachen bekannt. Unter Interpreter-Programmiersprachen sind Programmiersprachen zu verstehen, bei denen nicht der gesamte Programmcode kompiliert und in einem Objectcode gespeichert wird, sondern die einzelnen Befehle, die der Programmcode aufweist, einzeln, der Reihe nach in eine interne Form gebracht, also übersetzt werden, und dann durchgeführt werden.

Eine sogenannte zeit bzw. ereignisgesteuerte Interpreter-Programmiersprache ist beispielsweise die sogenannte Tool-Command-Language (TCL), deren Grundlagen in dem Dokument [1] beschrieben sind. Tcl-Programme treten typischerweise nach der Ausführung einer Initialisierung in eine sogenannte Event Loop ein, in die dynamisch Ereignisse eingefügt werden. Bei der Initialisierung werden beispielsweise Variablen gesetzt, Prozeduren deklariert, Routinen zur Behandlung spezifischer Ereignisse (Events) benannt, sowie graphische Elemente auf dem Bildschirm inkarniert. Unter dynamische Ereignissen sind Ereignisse zu verstehen, die beispielsweise per Mausklick in ein graphisches Bildschirmelement ausgelöst werden oder die durch den bisherigen Programmablauf hervorgerufen werden. Da von der Tcl-Laufzeitumgebung nur Ereignisse eingefügt werden, für die eine Ereignisbehandlungsroutine definiert ist, die z. B. von einem Programmierer oder vom System definiert werden, ist eine spezifische Behandlung der Ereignisse gewährleistet. Die Event Loop wird immer wieder durchlaufen, um festzustellen, ob ein noch unbehandeltes Ereignis vorliegt, dessen Bearbeitungszeitpunkt eingetreten ist. Hierbei ist zu bemerken, daß es Ereignisse gibt, deren Behandlung man zeitlich terminieren kann. Liegt ein solches Ereignis vor vor, so wird die spezifizierte Behandlungsroutine aufgerufen und ununterbrochen bis zu dessen Ende durchlaufen. Danach wird die Event Loop fortgesetzt und es werden neue Ereignisse behandelt.

Ferner ist ein Verfahren zum Debuggen, welches auf dem Send- und dem Uplevel-Sprachkonstrukt von TCL basiert, bekannt [2].

Bei diesem bekannten Verfahren wird ein zu ändernder (zu debuggender Code) mit einem Debugging-Zusatzcode versehen. Der zu ändernde Code wird zusammen mit dem Debugging-Zusatz-Code der Ereignisschleife, im weiteren als Aktualisierungsprozedur bezeichnet, übergeben, ausgeführt und gespeichert. Dieses Verfahren ist ausschließlich für Debugging-Zwecke ausgelegt. Dies bedeutet, daß der Programmcode nur ein einziges mal geändert wird. Der neue Programmcode kann dann schrittweise durchlaufen und die aktuellen Datenwerte können abgefragt werden. Dabei wird der Programmcode im eigentlichen Sinne gar nicht geändert, sondern, bildlich gesprochen, nur vom Debugging-Zusatzcode ummantelt. Spätere oder anwenderspezifische Änderungen am laufenden Programmcode sind mit diesem Verfahren nicht möglich.

Aus [3] sind ein System und Verfahren zur Aktualisierung von Kontrollcode eines Prozessors bekannt. Der 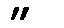 neue 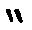 Code wird in das System geladen und mit dem 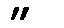 alten 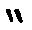 Code verglichen. Bei dem Vergleich werden Werte einer Vielzahl zu aktualisierender Variablen ermittelt. Der Abgleich erfolgt auf Basis dieser Werte.

Der Erfindung liegt das Problem zugrunde, Teile eines Programmcodes zu aktualisieren, während der Programmcode ausgeführt wird.

Das Problem wird durch das Verfahren gemäß Patentanspruch 1 und durch die Anordnung gemäß Patentanspruch 11 gelöst.

Es wird bei dem Verfahren von einer Aktualisierungsprozedur fortlaufend überprüft, ob ein Ereignis zur Ausführung ansteht. Bei dem Ereignis kann es sich z. B. um einen von einem weiteren Tcl-Programm zugesandten neuen Teil eines Programmcodes handeln. Ist dies der Fall, wird der neue Teil des Programmcodes von der Aktualisierungsprozedur gestartet, von dem Rechner durchgeführt und, falls es sich um eine Prozedurdeklaration handelt, gespeichert.

Die Anordnung gemäß Patentanspruch 11 weist eine Recheneinheit auf, die derart eingerichtet ist, daß von einer Aktualisierungsprozedur fortlaufend überprüft, ob ein Ereignis zur Ausführung ansteht. Ist dies der Fall, wird der neue Teil des Programmcodes von der Aktualisierungsprozedur gestartet, durchgeführt und, falls es sich um eine Prozedurdeklaration handelt, gespeichert.

Ein erheblicher Vorteil des Verfahrens und der Anordnung ist darin zu sehen, daß die beliebige inhaltliche und zeitliche Aktualisierung eines Teils eines Programmcodes möglich ist, während der Programmcode selbst ausgeführt wird. Dies führt zu einer erheblich reduzierten bzw. gänzlich vermiedenen Nutzungsausfalldauer, da es nicht mehr notwendig ist, bei der Einspielung neuer Programmversionen die Nutzung des Programmes zu unterbrechen. Es ist lediglich notwendig, daß der Teil des Programmcodes, der geändert wird, während der Änderung nicht ausgeführt wird. Dies ist aber bereits durch die Funktionsweise der Event Loop garantiert.

Vorteilhafte Weiterbildungen der Erfindung ergeben sich aus den abhängigen Ansprüchen.

Damit die Behandlung von Sondersituationen im Rahmen dieses Verfahrens einfacher möglich ist, sind verschiedene Weiterbildungen des Verfahrens vorteilhaft. Soll beispielsweise die alte Funktionalität des zu aktualisierenden Teils eines Programmcodes erhalten bleiben so ist es vorteilhaft, den neuen Teil des Programmcodes neu zu benennen, und alle Änderungen aller Aufrufe des neuen Teils auf den entsprechenden neuen Namen abzubilden.

Ferner ist es für den Fall, daß Aufrufe auf den neuen Teil abgebildet werden sollen, vorteilhaft, zum einen dem neuen Teil eine neue Bezeichnung zuzuordnen, und zum anderen den zu aktualisierenden Teil mit einer Abbildungsprozedur zu überschreiben, die die Abbildung des Aufrufs auf den zu aktualisierenden Teil auf den neuen Teil vornimmt.

Ferner ist es für den Fall, daß Aufrufe für den zu aktualisierenden Teil nicht mehr behandelt werden sollen, vorteilhaft, zum einen dem neuen Teil eine neue Bezeichnung zuzuordnen und zum anderen den zu aktualisierenden Teil mit einer Dummy-Prozedur zu überschreiben, die keinerlei Funktionalität aufweist.

Weiterhin ist es vorteilhaft, dem neuen Teil einen neuen Namen zuzuordnen und den alten Teil mit einer neuen Spezialprozedur zu überschreiben. Damit ist es möglich, Aufrufe des alten Teils des Programmcodes speziell in einer Weise zu behandeln, die durch die Funktionalität der Spezialprozedur beschrieben wird.

Weiterhin ist es in einer Weiterbildung des Verfahrens vorteilhaft, den Sonderfall zu berücksichtigen, daß der neue Teil eine unterschiedliche Anzahl von Aufrufparamtern aufweist als der alte Teil. Dabei ist es vorteilhaft, daß für den Fall, daß die Anzahl von Aufrufparametern für den neuen Teil größer ist als die Anzahl von Aufrufparametern für den zu aktualisierenden Teil, bei Aufruf des zu aktualisierenden Teils bei der Abbildung des Aufrufs auf den neuen Teil des Programmcodes dem abgebildeten Aufruf zusätzliche Parameterwerte zuzuordnen, die vorgebbare Werte aufweisen. Ist die Anzahl von Aufrufparametern für den neuen Teil jedoch kleiner, so ist es vorteilhaft, bei den Aufrufparametern des zu aktualisierenden Teils bei dem abgebildeten Aufruf für den neuen Teil die "überflüssigen" Aufrufparameter zu löschen, also nicht mehr zu berücksichtigen.

Ferner ist es bei unterschiedlicher Reihenfolge der Aufrufparameter für den neuen Teil und den zu aktualisierenden Teil vorteilhaft, die Reihenfolge der Aufrufparameter bei der Abbildung des Aufrufs entsprechend zu vertauschen.

Ferner ist es vorteilhaft, auch die Aufrufteile des Programmcodes durch die der jeweilige Teil aufgerufen wird, mit neuen Aufrufteilen zu aktualisieren, in denen die neue Semantik des neuen Teils des Programmcodes berücksichtigt wird.

Ein Ausführungsbeispiel des erfindungsgemäßen Verfahrens ist in den Figuren dargestellt und wird im weiteren näher erläutert.

Es zeigen
- Fig. 1: eine Skizze, in der über einer Zeitachse die Arbeitsweise eines ereignis-zeitgesteuerten Interpre ter-Programmiersprache-Systems symbolisch dargestellt wird;
- Fig. 2: ein Ablaufdiagramm, in dem die einzelnen Verfahrensschritte des erfindungsgemäßen Verfahrens dargestellt sind;
- Fig. 3: eine Rechneranordnung, mit dem das Verfahren notwendigerweise durchgeführt wird.

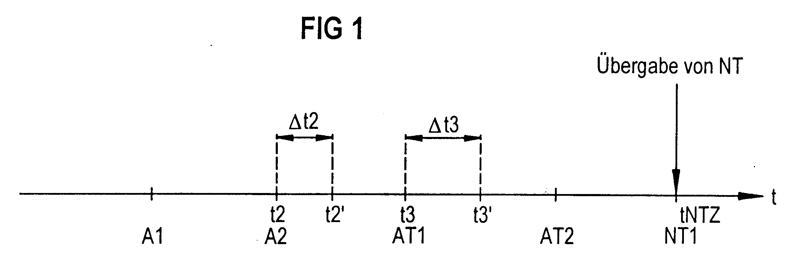

In Fig. 1 ist in einer Skizze über einer Zeitachse t dargestellt, wie ein beispielsweise aus dem Dokument [1] bekanntes ereignis-zeitgesteuertes Interpreter-Programmiersprache-System arbeitet. Allgemein basiert ein solches System auf einer Ereignisschleife (Event-Loop), die im weiteren anwendungsspezifisch als Aktualisierungsprozedur bezeichnet wird, die immer nach jeder Ereignisbearbeitung in der Event Loop überprüft, ob wieder ein neues Ereignis zur Bearbeitung ansteht, beispielsweise Befehlsaufrufe zur Ausführung von Aktionen, oder aber auch allgemeine Aufrufe von Teilen eines Programmcodes.

Im weiteren wird das Ausführungsbeispiel anhand der Interpreter-Programmiersprache TCL dargelegt. Das Verfahren ist jedoch nicht auf diese spezielle Programmiersprache beschränkt, es kann in jeder ereignis-zeitgesteuertes Interpreter-Programmiersprache eingesetzt werden.

Üblicherweise wird bei TCL durch den Durchlauf durch den gesamten Programmcode eine Initialisierung des Programms durchgeführt. Bei der Initialisierung werden beispielsweise Variablen gesetzt, Prozeduren deklariert, Ereignisbehandlungsroutinen benannt und graphische Bildschirmelemente inkarniert.Das eigentliche Programm, also die eigentliche Durchführung des Programmcodes wird erst mit Erreichen der Event-Loop, in die direkt nach der Initialisierung eingetreten wird, begonnen.

Beispielsweise Maus-Clicks oder über den TCL-spezifischen "After-Befehl" generierte Prozeduraufrufe werden als Ereignisse in diese Schleife "eingehängt" und der Reihe nach bzw. zu dem von einem Benutzer spezifizierten Zeitpunkt, zu dem das eingehängte Ereignis durchgeführt werden soll, abgearbeitet. Jeweils zwischen zwei Abarbeitungen von Ereignissen, symbolhaft in Fig. 1 dargestellt mit den Bezeichnungen A1, A2, AT1, AT2, NT1, ist es möglich, beispielsweise ein von extern kommendes Ereignis, beispielsweise von einem weiteren Tcl-Programm gesendetes Ereignis, abzuarbeiten. In der Programmiersprache TCL wird das gesendete Ereignis als Sende-Event bezeichnet. Im Sende-Event ist ein neuer Teil NT des Programmcodes spezifiziert. Das Sende-Event kann beispielsweise einen Prozeduraufruf enthalten, einen neuen Teil NT eines Programmcodes oder sonstige TCL-Befehle. In dem Verfahren werden vorzugsweise der Prozeduraufruf und der neue Teil NT des Programmcodes verwendet.

Mit dem neuen Teil NT des Programmcodes soll ein zu aktualisierender Teil AT des Programmcodes ersetzt werden.

Ein zu aktualisierender Teil AT eines Programmcodes wird in Fig. 1 beispielsweise durch das Ereignis AT1 aufgerufen. Ein weiteres Mal wird der zu aktualisierende Teil AT mit einem weiteren Aufruf AT2 aufgerufen. Die Bearbeitungsdauer des zu aktualisierenden Teils AT beginnt zu einem Zeitpunkt t3 und endet zu einem Zeitpunkt t3'. Die Zeitdauer Δt3 der Bearbeitung ist ebenso in Fig. 1 dargestellt. Ferner ist in Fig. 1 eine Bearbeitungsdauer Δt2 einer weiteren Aktion A2 dargestellt, welche zu einem ersten Aktionszeitpunkt t2 beginnt und zu einem zweiten Aktionszeitpunkt t2' beendet ist.

Um den von einem Benutzer vorgebbaren neuen Teil NT des Programmcodes zur Aktualisierung des zu aktualisierenden Teils AT zu verwenden, kann der TCL-spezifische Sende- und Empfangsmechanismus (send-Befehl), über den jedes TCL-Programm verfügt, verwendet werden. Allgemein kann jedoch in der Weise vorgegangen werden, daß der neue Teil NT einfach einer Aktualisierungs-Prozedur AP (Event Loop), welche fortlaufend überprüft, ob der Aktualisierungs-Prozedur AP eine Aktion und/oder ein benutzervorgebbarer neuer Teil NT des Programmcodes übergeben wurde, übermittelt wird. Dies ist in Fig. 1 symbolhaft zu einem Aktualisierungszeitpunkt tNTZ angedeutet.

Der neue Teil NT des Programmcodes kann beispielsweise über den Sende- und Empfangsmechanismus selbst oder auch aus einem Dateisystem eingelesen werden.

Wenn der neue Teil NT des Programmcodes direkt über die Kommunikationsverbindung gesendet werden soll, ist beispielsweise folgendes kleines TCL-Programm in dem zu aktualisierenden Teil AT des Programmcodes zusätzlich vorzusehen:

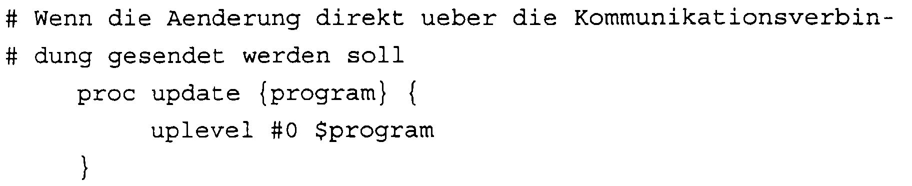

Das die Änderung vornehmende weitere Tcl-Programm hat dann folgendes auszuführen:
send $AT [list update $NT]

Dies führt in dem zu aktualisierenden Teil AT des Programmcodes zu einem Aufruf der Prozedur update, die wiederum den übergebenen neuen Teil NT einliest.

Soll der neue Teil NT aus dem Dateisystem eingelesen werden, so ist folgendes TCL-Programm im zu aktualisierenden Teil AT vorgesehen:

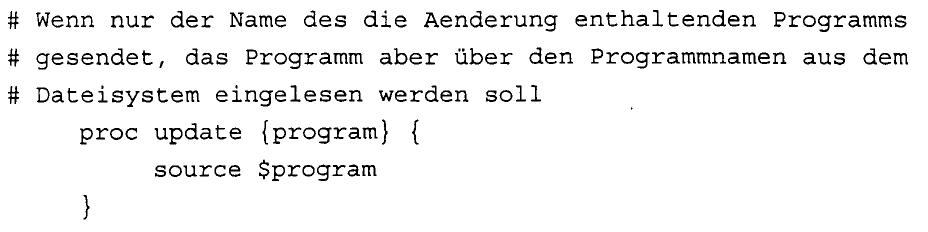

Das die Änderung vornehmende weitere Tcl-Programm hat dann folgendes auszuführen:
send $AT [list update $DateinameVonNTimDateisystem]

Dies führt in dem zu aktualisierenden Teil AT zu einem Aufruf der Prozedur update, die wiederum aus dem Dateisystem den neuen Teil NT einliest.

Dabei wird mit dem Parameter $program der neue Teil NT des Programmcodes bezeichnet.

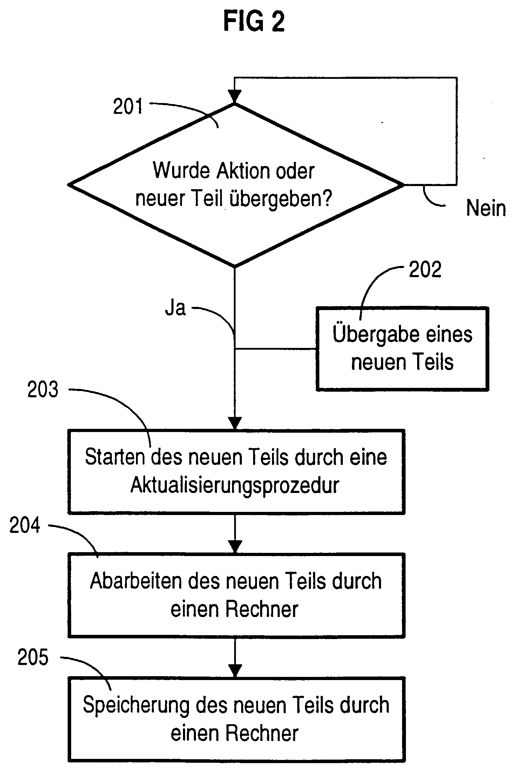

In Fig. 2 ist in einem Ablaufdiagramm das Verfahren in seinen einzelnen Verfahrensschritten dargestellt. Es wird in einem ersten Schritt 201 von der Aktualisierungs-Prozedur AP fortlaufend überprüft, ob der Aktualisierungs-Prozedur AP eine Aktion oder der neue Teil NT des Programmcodes übergeben wurde. Dies wird solange durchgeführt, bis der neue Teil NT der Aktualisierungs-Prozedur AP tatsächlich übergeben wird 202. Anschließend wird der neue Teil NT des Programmcodes von der Aktualisierungs-Prozedur AP gestartet 203 und der neue Teil NT wird von einem Rechner R, mit dem das Verfahren durchführt wird, abgearbeitet 204. Schließlich wird der neue Teil NT des Programmcodes abgespeichert 205.

In Weiterbildungen des erfindungsgemäßen Verfahrens ist es vorteilhaft, Sondersituationen bei der Aktualisierung eines Teils eines Programmcodes zu berücksichtigen, um die Verwendbarkeit des Verfahrens zu erweitern bzw. zu erleichtern und mögliche Fehler, die bei der Aktualisierung des Programmcodes entstehen können, zu vermeiden.

Im weiteren werden verschiedene Sondersituationen behandelt, die jedoch in keinster Weise als abschließend betrachtet werden sollen.

Für den Fall, daß die alte Funktionalität des zu aktualisierenden Teils AT des Programmcodes beibehalten werden soll, ist es vorteilhaft, dem neuen Teil NT eine neue Bezeichnung zuzuordnen, da die alte Bezeichnung des zu aktualisierenden Teils AT noch benötigt wird für schon in der Ereignisschleife (Event Loop) befindliche Aufrufe des zu aktualisierenden Teils AT des Programmcodes. Alle Aufrufe für den zu aktualisierenden Teil AT werden als Aufrufe für den neuen Teil NT geändert.

Für den Fall, daß Aufrufe von dem zu aktualisierenden Teil AT auf den neuen Teil NT abgebildet werden sollen, ist es vorteilhaft, zum einen dem neuen Teil NT eine neue Bezeichnung zuzuordnen, da die Bezeichnung des zu aktualisierenden Teils AT noch benötigt wird. Der alte Teil AT des Programmcodes wird in diesem Fall mit einer Abbildungs-Prozedur überschrieben, deren Funktionalität dadurch charakterisiert ist, daß mit ihr lediglich eine Abbildung des Aufrufs für den zu aktualisierenden Teil AT auf den neuen Teil NT vorgenommen wird. Diese Abbildung kann mit unveränderten Aufrufparamtern, die der Aufruf möglicherweise aufweisen kann, oder auch mit veränderten Aufrufparamtern erfolgen. Dieser Sonderfall wird im weiteren näher erläutert.

Für die Situation, daß die Aufrufe für den zu aktualisierenden Teil AT nicht weiter behandelt werden sollen, ist es vorteilhaft, dem neuen Teil NT eine neue Bezeichnung zuzuordnen. Der zu aktualisierende Teil AT wird in diesem Fall vorzugsweise mit einer Dummy-Prozedur überschrieben, die keinerlei Funktionalität aufweist, wodurch der Aufruf für den zu aktualisierenden Teil AT sozusagen gewollt "ins Leere" läuft.

Sollen Aufrufe für den zu aktualisierenden Teil AT in spezieller Weise behandelt werden, so ist es vorteilhaft, zum einen den neuen Teil NT mit einer neuen Bezeichnung zu benennen, da die Bezeichnung des zu aktualisierenden Teils AT weiterhin benötigt wird, und zum anderen den zu aktualisierenden Teil AT mit einer Spezial-Prozedur, deren Funktionalität von einem Benutzer vorgebbar ist, zu überschreiben. Bei einem Aufruf des zu aktualisierenden Teils AT wird in diesem Fall die Spezial-Prozedur durchgeführt.

Ferner kann der Fall auftreten, daß der Aufruf für den zu aktualisierenden Teil AT eine beliebige Anzahl von zur Ausführung benötigten Aufrufparamtern aufweist.

Hierbei kann beispielsweise der Fall auftreten, daß die Anzahl der Aufrufparamter für den zu aktualisierenden Teil AT ungleich der Anzahl von Aufrufparamtern, der zur Ausführung des neuen Teils NT benötigt wird, ist. Ferner kann die Reihenfolge der Aufrufparamter in dem Aufruf bei dem zu aktualisierenden Teil AT und dem neuen Teil NT unterschiedlich sein.

Für diesen Fall ist es in einer Weiterbildung des Verfahrens vorteilhaft, für den Fall, daß die Anzahl von Aufrufparamtern für den neuen Teil NT größer ist als die Anzahl von Aufrufparamtern für den zu aktualisierenden Teil AT folgende zusätzliche Schritte vorzusehen. Bei Aufrufen für den neuen Teil NT über den zu aktualisierenden Teil AT werden den Aufrufparametern des zu aktualisierenden Teils AT vorgebbare zusätzliche Parameterwerte zugeordnet und der neue Teil NT wird mit den Aufrufparametern und den zusätzlichen Parameterwerten der zusätzlichen Aufrufparameter, die zur Durchführung des neuen Teils NT benötigt werden, aufgerufen. Die vorgebbaren Paramterwerte können beliebige Werte aufweisen. Für den Fall, daß die Anzahl von Aufrufparametern für den

neuen Teil NT kleiner ist als die Anzahl von Aufrufparametern für den zu aktualisierenden Teil, ist es beispielsweise vorgesehen, die Aufrufparameter für den zu aktualisierenden Teil AT, die zur Durchführung des neuen Teils NT als Aufrufparameter nicht benötigt werden, nicht zu berücksichtigen, beispielsweise einfach zu löschen. Der neue Teil NT wird somit mit einem Aufruf aufgerufen, der lediglich die von dem neuen Teil NT benötigten Aufrufparameter aufweist.

Ist die Reihenfolge der Aufrufparameter bei dem neuen Teil NT anders als bei dem zu aktualisierenden Teil AT, so ist dies in einer Abbildungsprozedur zu berücksichtigen, die in der Weise ausgestaltet ist, daß die Reihenfolge der Aufrufparamter, die der Abbildungsprozedur übergeben werden, entsprechend vertauscht wird und der Aufruf für den neuen Teil NT derart aufgebaut ist, daß die Reihenfolge der Parameter so ist, wie sie von dem neuen Teil NT zur Durchführung des neuen Teils NT des Programmcodes benötigt wird. Dabei wird bei einem Aufruf des zu aktualisierenden Teil AT die Abbildungsprozedur aufgerufen, mit der die Vertauschung der Reihenfolge durchgeführt wird.

Sind beispielsweise die Anzahl von Rückgabeparametern, die der neue Teil NT nach Durchführung des Programmteils liefert, ungleich bzw. in ihrer semantischen Bedeutung unterschiedlich zu den Rückgabeparamtern des alten Teils AT, so ist es in einer Weiterbildung des Verfahrens vorteilhaft, Aufrufteile des Programmcodes, durch die der jeweilige Teil AT, NT aufgerufen wird, bzw. von denen die Rückgabeparameter des jeweiligen Teils AT, NT weiterverarbeitet werden, mit neuen Aufrufteilen zu aktualisieren, in denen die neue Semantik, beispielsweise die neuen Rückgabeparameter des neuen Teils NT, berücksichtigt werden.

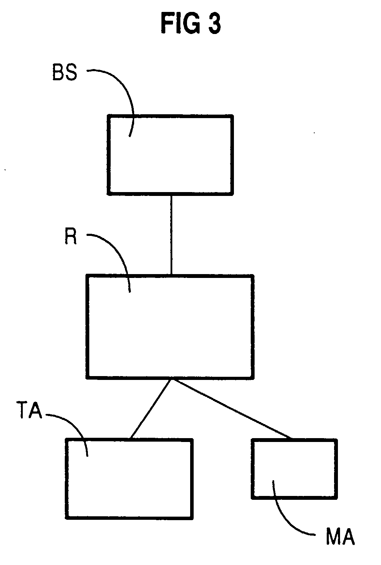

In Fig. 3 ist eine Rechneranordnung dargestellt, mit dem das Verfahren notwendigerweise durchgeführt wird. Die Rechneranordnung weist üblicherweise mindestens folgende Komponenten auf:
- einen Rechner R,
- einen Bildschirm BS,
- eine Tastatur TA, und
- eine Maus MA.

Ferner können weitere Ausgabemittel, beispielsweise ein Drucker oder abgewandelte Eingabemittel, beispielsweise ein sog. Touch-Screen in der Rechneranordnung vorgesehen sein.

In diesem Dokument wurden folgende Veröffentlichungen zitiert:
[1] J. K. Ousterhout, TCL- Buch, Addison-Wesley, S. 1 - 3, S. 78, S. 206 - 207, S. 243 - 246, S. 263,
[2] G. Schmid, Technische Universität Berlin, Fachbereich Mathematik, TCL-Debugger Tdebug, 1995, erhältlich im Internet über die Adresse:
   - URL:: ftp://ftp.aud.alcatel.com/tcl/code/tdebug-1.0.README (Anleitung)
   bzw.
   - URL:: ftp://ftp.aud.alcatel.com/tcl/code/tdebug-1.0.tar.gz (Debugger-Code)
[3] EP 0 602 869 A2

## Patentansprüche

1. Verfahren zur Aktualisierung eines Teils (AT) eines Programmcodes, wobei der Programmcode in einer Interpreter-Programmiersprache vorliegt, während der Ausführung des Programmcodes, durch einen Rechner,
- bei dem, von einer Aktualisierungs-Prozedur (AP) fortlaufend überprüft wird, ob der Aktualisierungs-Prozedur (AP) ein benutzervorgegebbarer neuer Teil (NT) des Programmcodes übergeben wurde (201),
- bei dem für den Fall, daß der neue Teil (NT) des Programmcodes der Aktualisierungs-Prozedur (AP) übergeben wurde, der neue Teil (NT) des Programmcodes von der Aktualisierungs-Prozedur (AP) gestartet wird (203),
- bei dem der neue Teil (NT) des Programmcodes durch den Rechner abgearbeitet wird (204), und
- bei dem der neue Teil (NT) des Programmcodes gespeichert wird (205).

2. Verfahren nach Anspruch 1, bei dem dem neuen Teil (NT) des Programmcodes eine im Vergleich zu dem zu aktualisierenden Teil (AT) des Programmcodes neue Bezeichnung zugeordnet wird.

3. Verfahren nach Anspruch 2,
bei dem Aufrufe des zu aktualisierenden Teils (AT) des Programmcodes auf den neuen Teil (NT) des Programmcodes abgebildet werden.

4. Verfahren nach Anspruch 2,
bei dem der zu aktualisierende Teil (AT) des Programmcodes mit einer Abbildungsprozedur überschrieben wird, mit der bei Aufruf der Abbildungsprozedur der neue Teil (NT) des Programmcodes aufgerufen wird.

5. Verfahren nach Anspruch 2,
bei dem der zu aktualisierende Teil (AT) des Programmcodes mit einer Dummyprozedur überschrieben wird, die keine Funktion aufweist.

6. Verfahren nach Anspruch 2,
bei dem der zu aktualisierende Teil (AT) des Programmcodes mit einer Spezial-Prozedur vorgebbarer Funktionalität unter dem alten Namen überschrieben wird.

7. Verfahren nach einem der Ansprüche 1 bis 6,
bei dem der zu aktualisierende Teil (AT) des Programmcodes und der neue Teil (NT) des Programmcodes zur Ausführung Aufrufparamter benötigen, die bei Aufruf des jeweiligen Teils (AT, NT) mit dem Aufruf zusammen von einem weiteren Teil des Programmcodes, durch den der jeweilige Teil (AT, NT) aufgerufen wird, übergeben werden.

8. Verfahren nach Anspruch 7,
- bei dem eine Anzahl der Aufrufparameter für den neuen Teil (NT) unterschiedlich ist zu einer Anzahl der Aufrufparameter des zu aktualisierenden Teils (AT),
- bei dem für den Fall, daß die Anzahl von Aufrufparametern für den neuen Teil (NT) größer ist als die Anzahl von Aufrufparametern für den zu aktualisierenden Teil (AT), bei Aufrufen des neuen Teils (NT) über den zu aktualisierenden Teil (AT) den Aufrufparametern des zu aktualisierenden Teils vorgebbare zusätzliche Paramterwerte zugeordnet werden und der neue Teil (NT) mit den Aufrufparametern und den zusätzlichen Paramterwerten aufgerufen werden, und
- bei dem für den Fall, daß die Anzahl von Aufrufparametern für den neuen Teil (NT) kleiner ist als die Anzahl von Aufrufparametern für den zu aktualisierenden Teil (AT), bei Aufrufen des neuen Teils (NT) über den zu aktualisierenden Teil (AT) die Aufrufparametern des zu aktualisierenden Teils gelöscht werden, die nicht als Aufrufparameter des neuen Teils (NT) verwendet werden.

9. Verfahren nach einem der Anspruch 7 oder 8,
- bei dem die Reihenfolge der Aufrufparameter für den neuen Teil (NT) unterschiedlich ist zu der Reihenfolge der Aufrufparameter des zu aktualisierenden Teils (AT), und
- bei dem die Aufrufparameter bei Aufruf des zu aktualisierenden Teils (AT) in der Weise in der Reihenfolge vertauscht werden, daß die Reihenfolge der Aufrufparameter der Reihenfolge der Aufrufparameter für den neuen Teil (NT) entspricht.

10. Verfahren nach einem der Ansprüche 1 bis 9,
bei dem die Aufruf-Teile des Programmcodes, durch die der jeweilige Teil (AT, NT) aufgerufen wird, mit neuen Aufruf-Teilen aktualisiert werden, in denen eine neue Semantik des neuen Teils (NT) berücksichtigt werden.

11. Anordnung zur Aktualisierung eines Teils (AT) eines Programmcodes, wobei der Programmcode in einer Interpreter-Programmiersprache vorliegt, während der Ausführung des Programmcodes,
mit einer Recheneinheit, die derart eingerichtet ist, daß
- von einer Aktualisierungs-Prozedur (AP) fortlaufend überprüft wird, ob der Aktualisierungs-Prozedur (AP) ein benutzervorgegebbarer neuer Teil (NT) des Programmcodes übergeben wurde (201),
- für den Fall, daß der neue Teil (NT) des Programmcodes der Aktualisierungs-Prozedur (AP) übergeben wurde, der neue Teil (NT) des Programmcodes von der Aktualisierungs-Prozedur (AP) gestartet wird (203),
- der neue Teil (NT) des Programmcodes durch den Rechner abgearbeitet wird (204), und
- der neue Teil (NT) des Programmcodes gespeichert wird (205).

12. Anordnung nach Anspruch 11,
bei der die Recheneinheit derart eingerichtet ist, daß dem neuen Teil (NT) des Programmcodes eine im Vergleich zu dem zu aktualisierenden Teil (AT) des Programmcodes neue Bezeichnung zugeordnet wird.

13. Anordnung nach Anspruch 12,
bei der die Recheneinheit derart eingerichtet ist, daß Aufrufe des zu aktualisierenden Teils (AT) des Programmcodes auf den neuen Teil (NT) des Programmcodes abgebildet werden.

14. Anordnung nach Anspruch 12,
bei der die Recheneinheit derart eingerichtet ist, daß der zu aktualisierende Teil (AT) des Programmcodes mit einer Abbildungsprozedur überschrieben wird, mit der bei Aufruf der Abbildungsprozedur der neue Teil (NT) des Programmcodes aufgerufen wird.

15. Anordnung nach Anspruch 12,
bei der die Recheneinheit derart eingerichtet ist, daß der zu aktualisierende Teil (AT) des Programmcodes mit einer Dummyprozedur überschrieben wird, die keine Funktion aufweist.

16. Anordnung nach Anspruch 12,
bei der die Recheneinheit derart eingerichtet ist, daß der zu aktualisierende Teil (AT) des Programmcodes mit einer Spezial-Prozedur vorgebbarer Funktionalität unter dem alten Namen überschrieben wird.

17. Anordnung nach einem der Ansprüche 11 bis 16,
bei der die Recheneinheit derart eingerichtet ist, daß der zu aktualisierende Teil (AT) des Programmcodes und der neue Teil (NT) des Programmcodes zur Ausführung Aufrufparamter benötigen, die bei Aufruf des jeweiligen Teils (AT, NT) mit dem Aufruf zusammen von einem weiteren Teil des Programmcodes, durch den der jeweilige Teil (AT, NT) aufgerufen wird, übergeben werden.

18. Anordnung nach Anspruch 17,
bei der die Recheneinheit derart eingerichtet ist, daß
- eine Anzahl der Aufrufparameter für den neuen Teil (NT) unterschiedlich ist zu einer Anzahl der Aufrufparameter des zu aktualisierenden Teils (AT),
- für den Fall, daß die Anzahl von Aufrufparametern für den neuen Teil (NT) größer ist als die Anzahl von Aufrufparametern für den zu aktualisierenden Teil (AT), bei Aufrufen des neuen Teils (NT) über den zu aktualisierenden Teil (AT) den Aufrufparametern des zu aktualisierenden Teils vorgebbare zusätzliche Paramterwerte zugeordnet werden und der neue Teil (NT) mit den Aufrufparametern und den zusätzlichen Paramterwerten aufgerufen werden, und
- für den Fall, daß die Anzahl von Aufrufparametern für den neuen Teil (NT) kleiner ist als die Anzahl von Aufrufparametern für den zu aktualisierenden Teil (AT), bei Aufrufen des neuen Teils (NT) über den zu aktualisierenden Teil (AT) die Aufrufparametern des zu aktualisierenden Teils gelöscht werden, die nicht als Aufrufparameter des neuen Teils (NT) verwendet werden.

19. Anordnung nach Anspruch 17 oder 18,
bei der die Recheneinheit derart eingerichtet ist, daß
- die Reihenfolge der Aufrufparameter für den neuen Teil (NT) unterschiedlich ist zu der Reihenfolge der Aufrufparameter des zu aktualisierenden Teils (AT), und
- die Aufrufparameter bei Aufruf des zu aktualisierenden Teils (AT) in der Weise in der Reihenfolge vertauscht werden, daß die Reihenfolge der Aufrufparameter der Reihenfolge der Aufrufparameter für den neuen Teil (NT) entspricht.

20. Anordnung nach einem der Ansprüche 11 bis 19,
bei der die Recheneinheit derart eingerichtet ist, daß die Aufruf-Teile des Programmcodes, durch die der jeweilige Teil (AT, NT) aufgerufen wird, mit neuen Aufruf-Teilen aktualisiert werden, in denen eine neue Semantik des neuen Teils (NT) berücksichtigt werden.
